# EUROPEAN PATENT SPECIFICATION

(11) **EP 2 832 465 B1**
(45) Date of publication and mention of the grant of the patent: **27.02.2019**
(21) Application number: 13768492.4
(22) Date of filing: 04.03.2013
(51) Int. Cl.: B21D 22/00, B21D 22/20, B21D 53/88, G06F 17/50

(54) **PRESS-FORMING ANALYSIS METHOD**
PRESSFORMUNGSANALYSEVERFAHREN
PROCÉDÉ D'ANALYSE DE FORMAGE SOUS PRESSION

(30) Priority: 26.03.2012 JP 2012068593
(43) Date of publication of application: 04.02.2015
(73) Proprietor: JFE Steel Corporation, Tokyo, 100-0011 (JP)
(72) Inventor: MINOTE, Toru, Tokyo 100-0011 (JP); TOKITA, Yuichi, Tokyo 100-0011 (JP); TAMAI, Yoshikiyo, Tokyo 100-0011 (JP); URABE, Masaki, Tokyo 100-0011 (JP); FUJITA, Takeshi, Tokyo 100-0011 (JP)
(74) Representative: Haseltine Lake LLP
(86) International application number: PCT/JP2013/055805
(87) International publication number: WO 2013/146106

(56) References cited:
- JP-A- 2001 314 923
- JP-A- 2006 213 941
- JP-A- 2007 229 724
- JP-A- 2008 055 476
- JP-A- 2008 273 796
- JP-A- 2010 207 910
- JP-A- 2011 161 481
- JP-A- 2011 198 305
- JP-A- 2013 059 800
- US-A1- 2011 246 150
- LEE M G ET AL: "Finite element investigations for the role of transformation plasticity on springback in hot press forming process", COMPUTATIONAL MATERIALS SCIENCE, ELSEVIER, AMSTERDAM, NL, vol. 47, no. 2, 1 December 2009 (2009-12-01), pages 556-567, XP026777109, ISSN: 0927-0256, DOI: 10.1016/J.COMMATSCI.2009.09.024 [retrieved on 2009-11-11]
- CHENOT ET AL: "Finite element modelling and control of new metal forming processes", INTERNATIONAL JOURNAL OF MACHINE TOOL DESIGN AND RESEARCH, PERGAMON PRESS, OXFORD, GB, vol. 46, no. 11, 1 September 2006 (2006-09-01), pages 1194-1200, XP005572811, ISSN: 0020-7357

## Description

### Field

The present invention relates to a press-forming analysis method, and more particularly to a press-forming analysis method for predicting the shape of a press-forming metallic sheet after cooling process when the press-forming metallic sheet is heated and press-formed.

### Background

Press forming is a method for processing a metallic sheet to be press-formed (hereinafter, press-forming metallic sheet), which is an object to be processed, by pressing a mold against the press-forming metallic sheet, and transferring the form of the mold onto the press-forming metallic sheet. In the press forming, it has often been a problem that springback (elastic deformation) occurs in a press-formed product after the mold release, which results in an undesirable shape.

Such springback is known to be caused by a residual stress residing in the press-formed product before the mold release, and a numerical analysis such as finite element method has been conventionally used to predict the shape after springback and to analyze the cause of the springback.

A conventional example related to a factorial experiment on springback is the "press-forming analysis method" disclosed in Patent Literature 1. The press-forming analysis method disclosed in Patent Literature 1 includes calculating data such as the shape of the press-formed product before the mold release, calculating data such as the shape of the press-formed product after the mold release based on the data before the mold release and calculating a certain predefined amount related to springback, changing the residual stress distribution in a particular region of the press-formed product before the mold release and calculating the data such as the shape of the press-formed product after the mold release based on the data thus changed, calculating the predefined amount related to springback after the residual stress distribution is changed for the particular region, and calculating how the predefined amount changes before and after the residual stress distribution in the particular region is changed. The press-forming analysis method disclosed in Patent Literature 1 quickly and accurately predicts how springback will be affected by the residual stress of which region of a press-formed product before the mold release, and enables a countermeasure for the springback to be designed.

Hereunder, a press-forming analysis method includes a press-forming analysis analyzing conditions of a press-forming metallic sheet while being press-formed and before the mold release, a springback analysis analyzing springback in the press-forming metallic sheet after the mold release, and a cooling analysis analyzing changes in the shape and in the stress that are caused by a temperature change after the springback.

Conventional springback analysis methods have been intended for cold press forming in which a metallic sheet is press-formed without being heated, as disclosed in prior art such as Patent Literature 1.

Recently, ratio of a high strength steel sheet used as a steel sheet for automobile parts is increasing, to improve fuel efficiency as well as crashworthiness. However, the high strength steel sheet has a disadvantage that lifetime of a mold is shortened in cold press forming due to high flow stress of the high strength steel sheet. Furthermore, since the high strength steel sheet extends less and cracks easily, the high strength steel sheet has a problem that processing of the high strength steel sheet is limited to formation other than severe plastic deformation such as deep-drawing or stretch-flanging.

In order to avoid such a problem, a method or a process called warm press forming, in which the press-forming metallic sheet is heated to a predetermined temperature before press forming is performed, is applied to the high strength steel sheet. The warm press forming is a technology where the press forming is performed at a temperature higher than that used in cold press forming to reduce the flow stress and improve the formability of the high strength steel sheet for preventing defects such as cracks caused in the press forming. An example of such a warm press forming technology is disclosed in Patent Literature 2.

Non-Patent Literature 1 discloses a phase transformation plasticity model used to examine the springback of a hot press formed sheet. Plane stress formulations for the shell element were provided to predict the transformation kinetics and thermo-mechanical behavior during mechanical forming at high temperatures and subsequent cooling. Parametric analyses were performed to examine the combined effects of the transformation plasticity, the volumetric strain and cooling rate on the springback.

### Citation List

### Patent Literature

Patent Literature 1: Japanese Laid-open Patent Publication No. 2007-229724
Patent Literature 2: Japanese Laid-open Patent Publication No. 2001-314923

Non-Patent Literature 1: Lee M G et al, "Finite element investigations for the role of transformation plasticity on springback in hot press forming process", ISSN: 0927-0256

### Summary

### Technical Problem

In order to investigate into defective formation of a warm press-formed high strength steel sheet, the inventors used a finite element method to conduct a springback analysis on a product after the mold release. The inventors then compared the shape acquired from the springback analysis with the shape of a press-formed product acquired from the actual warm press forming, and found a large difference. From this analysis, the inventors found out that it is impossible to analyze what kind of shape a product will eventually take, or what is the cause of the difference between the shape resulting from an analysis and the actual shape (defective formation), without any consideration about the thermal contraction during the cooling process, because, after the warm press forming, a press-formed product immediately after the mold release is highly heated, and has some temperature distribution.

However, in the conventional technologies for designing a countermeasure for defective formation, because cold press forming is assumed using the press forming analysis and the springback analysis, no consideration is given to a temperature distribution in the press-forming metallic sheet. Therefore, such technologies cannot be used for designing the countermeasure for defective formation resulting from warm press forming.

The present invention is made in consideration of the above, and an object of the present invention is to provide a press-forming analysis method enabling to simply and appropriately predict the shape after the cooling process and to identify the cause of a defective formation in warm press forming.

### Solution to Problem

To solve the above-described problem and achieve the object, a computer-implemented press-forming analysis method for predicting the shape of a press-forming metallic sheet after cooling process when the press-forming metallic sheet is heated and press-formed, according to the present invention, includes: a step of analyzing press forming, including setting an initial temperature distribution to a heated press-forming metallic sheet, and acquiring shape information, a temperature distribution, a stress distribution, and a strain distribution before mold release by conducting a press forming analysis in which a temperature analysis and a structural analysis are coupled; a step of analyzing springback, including conducting a springback analysis based on the shape information, the temperature distribution, the stress distribution, and the strain distribution acquired at the step of analyzing press forming, and acquiring shape information, a temperature distribution, a stress distribution, and a strain distribution after springback by the springback analysis; and a step of analyzing cooling stress, including restraining particular nodes , analyzing stress distributions during cooling and after the cooling by coupling a temperature analysis and a structural analysis based on the shape information, the temperature distribution, the stress distribution, and the strain distribution acquired at the step of analyzing springback; and a further step of analyzing springback, wherein the press-forming metallic sheet is divided into a plurality of regions after the cooling stress analyzing step, and a springback analysis is conducted by releasing a stress in a specific one of the regions thus divided sequentially.

In the above-described press-forming analysis method according to the present invention, the particular nodes may be nodes surrounding an entire processed portion or a part of the processed portion of the press-forming metallic sheet.

In the above-described press-forming analysis method according to the present invention, the particular nodes may be all of the nodes.

### Advantageous Effects of Invention

According to the present invention, a press-forming analysis method that can predict the shape after the cooling process simply and appropriately and that can identify the cause of a defective formation in the warm press forming can be provided.

### Brief Description of Drawings

FIG. 1 is a block diagram for explaining a configuration of an apparatus according to an embodiment of the present invention.
FIG. 2 is a flowchart for explaining a first process useful for understanding the present invention .
FIG. 3 is a flowchart for explaining a second process useful for understanding the present invention.
FIG. 4 is a schematic for explaining a region of a subject of an analysis in the second process useful for understanding the present invention and in an embodiment.
FIG. 5 is a flowchart for explaining a process according to the embodiment.
FIG. 6 is a schematic for explaining the same subject of an analysis as that in FIG. 4 in an embodiment of the present invention.
FIG. 7 is a schematic for explaining a countermeasure for defective formation in the embodiments.
FIG. 8 is a schematic for explaining the shape of a mold used in the embodiment, and is a sectional view of the mold corresponding to the sectional view across the arrow A-A in FIG. 6.
FIG. 9 is a schematic for explaining an effect achieved in the embodiment.

### Description of Embodiment

The inventors gained a knowledge that, for the defective formation that occurs in warm press forming, because the temperature of a press-formed product is high immediately after mold release, the effect of thermal contraction, which occurs during the cooling process, needs to be considered based on a temperature distribution having occurred during the warm press forming, in addition to the effect of the residual stress generated at the bottom dead point.

As a method of a cooling analysis for allowing an investigation into an effect of deformation caused by the thermal contraction during the cooling process based on the temperature distribution, for example, there is a method of modifying a part of a temperature distribution after springback, and checking how the temperature distribution thus modified affects the defective formation. However, in such a method, since the shape after the cooling process needs to be determined by repeating trial and error of cooling analyses while changing the regions where the temperature distribution is modified, a long time is required for the cooling analyses.

Because a press-formed product deforms during the cooling process due to the thermal contraction caused by the temperature distribution, the inventors came to believe that the thermal contraction caused by the temperature distribution can be converted into a residual stress, if the press-formed product having gone through the springback immediately after the mold release is allowed to thermally contract applying with restraints not to deform. The inventors also came to believe that the effect of a temperature distribution can be evaluated simply and accurately without repeating a cooling analysis many times, if an investigation is made based on the residual stress thus converted.

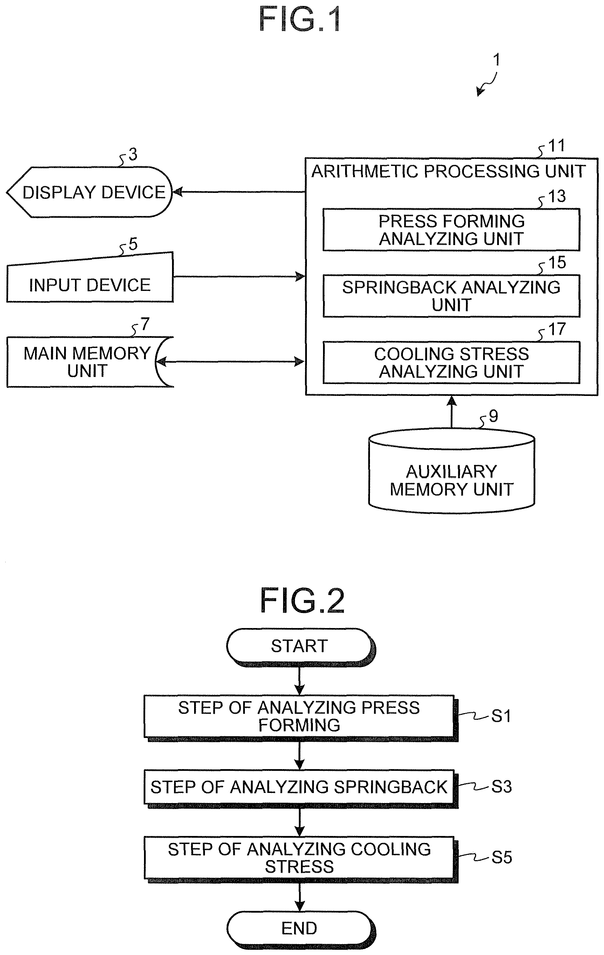

Because the press-forming analysis method according to the present invention is executed by an apparatus such as a personal computer (PC) executing a computer program, a configuration of an apparatus (hereinafter, referred to as a press-forming analyzing apparatus) is generally explained with reference to a block diagram illustrated in FIG. 1.

### Press-Forming Analyzing Apparatus

A press-forming analyzing apparatus 1 according to the embodiment is the PC, for example, and includes a display device 3, an input device 5, a main memory unit 7, an auxiliary memory unit 9, and an arithmetic processing unit 11, as illustrated in FIG. 1.

The display device 3, the input device 5, the main memory unit 7, and the auxiliary memory unit 9 are connected to the arithmetic processing unit 11, and each function is executed in response to a command from the arithmetic processing unit 11.

The display device 3 is, for example, a liquid crystal display (LCD) monitor that displays calculation results, for example. The input device 5 is a device such as a keyboard, a mouse, and the like, and is used for receiving inputs from an operator. The main memory unit 7 is a random access memory (RAM), for example, that temporarily stores therein or operating data to be used by the arithmetic processing unit 11. The auxiliary memory unit 9 is a hard disk, for example, that stores therein data.

The arithmetic processing unit 11 is a central processing unit (CPU) or the like provided to the PC, for example, and the arithmetic processing unit 11 includes a press forming analyzing unit 13, a springback analyzing unit 15, and a cooling stress analyzing unit 17. These units are realized by causing the CPU or the like to execute a predetermined computer program. These units will now be explained.

### Press Forming Analyzing Unit

The press forming analyzing unit 13 acquires shape information, a temperature distribution, a stress distribution, and a strain distribution of a press-forming metallic sheet before the mold release, by setting an initial temperature distribution to a heated press-forming metallic sheet, and performing a press forming analysis in which a temperature analysis (a temperature distribution analysis) and a structural analysis (an analysis of conditions of stresses or the like) are coupled.

### Springback Analyzing Unit

The springback analyzing unit 15 acquires shape information, a temperature distribution, a stress distribution, a strain distribution, and the like of the press-formed product after springback by performing a springback analysis of the press-forming metallic sheet based on the information acquired by the press forming analyzing unit 13. The springback analyzing unit 15 performs steps of a springback analyzing step, a second springback analyzing step, and a third springback analyzing step of, as will be explained later.

### Cooling Stress Analyzing Unit

The cooling stress analyzing unit 17 applies restraints on particular nodes of a press-forming metallic sheet, and analyzes the stress distribution of the press-forming metallic sheet during the cooling process or after the cooling process by coupling a temperature analysis and a structural analysis based on the shape information, the temperature distribution, the stress distribution, and the strain distribution acquired by the springback analyzing unit 15.

Because the shape of the press-forming metallic sheet hardly changes or does not change at all when the particular nodes of the press-forming metallic sheet are restrained, the thermal stress generated during cooling is accumulated as a residual stress. The cooling stress analyzing unit 17 can then acquire the residual stress thus accumulated as a stress distribution.

The particular nodes may be nodes surrounding the entire processed portion of the press-forming metallic sheet, or those surrounding a part of the processed portion, or may be all the nodes, for example. The cooling stress analyzing unit 17 applies restraints on the nodes by setting displacement of the nodes to zero.

The method for determining nodes is not limited to those mentioned above. The cooling stress analyzing unit 17 may use any method allowing thermal stress to be accumulated based on the shape of the press-formed product or the temperature distribution after springback. When the particular nodes are defined as the nodes surrounding the entire processed portion or a part of the processed portion, a relationship of thermal stresses in adjacent nodes are reflected appropriately, and the thermal stress caused by a temperature distribution can be converted into a residual stress appropriately.

### Press-Forming Analysis Method

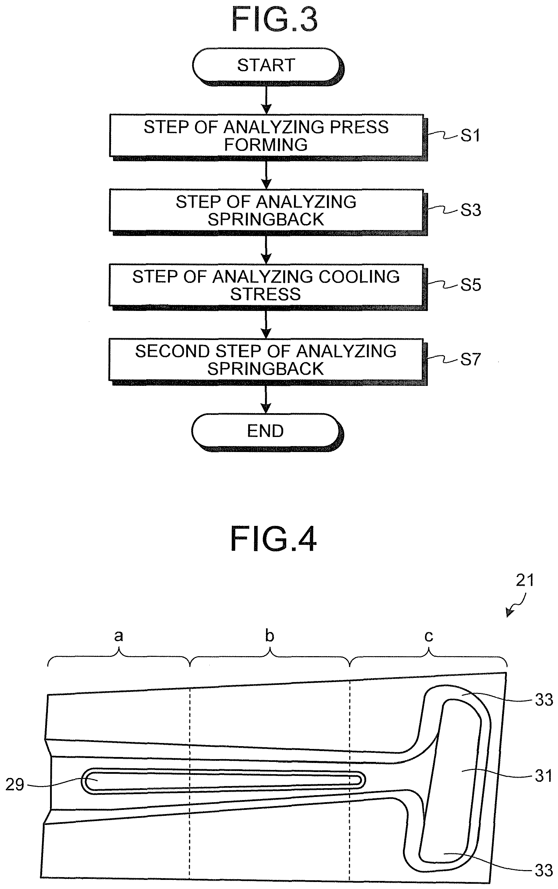

The press-forming analysis method according to the embodiment is achieved by causing each of the press forming analyzing unit 13, the springback analyzing unit 15, and the cooling stress analyzing unit 17 to execute a corresponding process. Before describing an embodiment, processes (methods) useful for understanding the present invention will be described with respect to FIGs 2 and 3.

The press-forming analysis method illustrated in FIG. 2 includes a step of analyzing press forming (S1) at which an initial temperature distribution is set to a heated press-forming metallic sheet, and shape information, a temperature distribution, a stress distribution, and a strain distribution of the press-forming metallic sheet before the mold release are acquired by performing a press forming analysis by coupling a temperature analysis and a structural analysis, a step of analyzing springback (S3) at which shape information, a temperature distribution, a stress distribution, and a strain distribution of the press-forming metallic sheet after springback are acquired by performing a springback analysis based on the shape information, the temperature distribution, the stress distribution, and the strain distribution acquired at the step of analyzing press forming, and a step of analyzing cooling stress (S5) at which particular nodes are restrained based on the shape information, the temperature distribution, the stress distribution, and the strain distribution acquired at the step of analyzing springback, and the stress distribution during the cooling process and after the cooling process is analyzed by coupling a temperature analysis and a structural analysis.

In the press-forming analysis method of FIG 2, a press-forming metallic sheet is analyzed by coupling a temperature analysis and a structural analysis at each of these analyzing steps. An analysis coupling the temperature analysis and the structural analysis means to analyze the temperature distribution in the press-forming metallic sheet considering cooling of the press-forming metallic sheet by air or a contact heat transfer between the mold and the press-forming metallic sheet (temperature analysis), and to analyze a stressing condition or the like of the press-forming metallic sheet based on the temperature distribution acquired in the temperature analysis, using temperature-dependent data corresponding to the temperature (e.g., Young's modulus, Poisson's ratio, thermal expansion coefficient, yield stress, stress-strain diagram, specific heat, and thermal conductivity), (structural analysis). A complex relationship between the shape of the press-forming metallic sheet and the temperature distribution is taken into consideration by coupling the temperature analysis and the structural analysis in the analysis of the press-forming metallic sheet. Therefore, the shape information or the like thus acquired becomes more precise than that acquired through a structural analysis alone, advantageously.

Each of the steps in the above press-forming analysis method will now be explained in detail with reference to FIG. 2.

### Step of Analyzing Press Forming

At the step of analyzing press forming, the press forming analyzing unit 13 sets an initial temperature distribution to the heated press-forming metallic sheet, and performs a press forming analysis by coupling the temperature analysis and the structural analysis, to acquire shape information, the temperature distribution, the stress distribution, and the strain distribution before the mold release (S1).

Setting of an initial temperature distribution to the heated press-forming metallic sheet will now be explained. In the actual warm press forming, after the press-forming metallic sheet is sufficiently heated in an electric furnace, a burner furnace, an induction heater, or the like to an even temperature, the press-forming metallic sheet is conveyed by a conveying robot into a press machine, and is press-formed.

At the step of analyzing press forming, the press forming analyzing unit 13 sets an even temperature distribution (e.g., 600 degrees Celsius) across the entire press-forming metallic sheet as an initial temperature distribution, assuming actual heating of the metallic sheet to be press-formed. To achieve a higher precision, the press forming analyzing unit 13 may use a temperature distribution calculated by considering cooling of the press-forming metallic sheet by air while being conveyed after being heated by the electric furnace or the like as the initial temperature distribution. When the press-forming metallic sheet is partially heated intentionally, the press forming analyzing unit 13 may provide an uneven temperature distribution to the press-forming metallic sheet accordingly.

At the step of analyzing press forming, the press forming analyzing unit 13 receives an input of necessary temperature-dependent data (e.g., Young's modulus, Poisson's ratio, thermal expansion coefficient, yield stress, stress-strain diagram, specific heat, thermal conductivity), and provides the initial temperature distribution to the press-forming metallic sheet and to the mold.

In warm press forming, there are some cases that, depending on the shape of the part, springback after the mold release is suppressed and a better shape is achieved by cooling the press-forming metallic sheet at the bottom dead point of the press for a certain length of time. Therefore, at the step of analyzing press forming, the press forming analyzing unit 13 may set a cooling time in advance so that the press-forming metallic sheet is held and cooled in the mold for a certain length of time. Because, production efficiency of the warm press forming is reduced when the cooling time is extended, it is preferable for the press forming analyzing unit 13 to set a cooling time considering the production efficiency in the actual operation in advance.

The data calculated at the step of analyzing press forming such as the shape information, the temperature distribution, the stress distribution, and the strain distribution of the press-forming metallic sheet immediately before the mold release and such data of the mold are carried over to the next step of analyzing springback (S3).

### Step of Analyzing Springback

At the step of analyzing springback, the springback analyzing unit 15 performs a springback analysis based on the shape information, the temperature distribution, the stress distribution, and the strain distribution acquired at the step of analyzing press forming (S1), to acquire shape information, a temperature distribution, a stress distribution, and a strain distribution of the press-forming metallic sheet after springback (S3).

There are two types of methods for performing a springback analysis, and these types include a method for performing a springback analysis without considering the contact heat transfer between the mold and the press-forming metallic sheet, and a method for performing a springback analysis considering the contact heat transfer. Because both of these methods have advantages and disadvantages, the springback analyzing unit 15 can use one of these method on case-by-case basis.

In the method for performing the springback analysis considering the contact heat transfer between the mold and the press-forming metallic sheet, because the springback analyzing unit 15 can consider the temperature change caused by mold release more precisely, the temperature distribution in the press-forming metallic sheet after springback can be acquired more precisely. Therefore, the residual stress distribution that is acquired at the step of analyzing cooling stress (S5), which will be explained later, can be acquired more precisely.

Specifically, when a springback analysis is performed considering the contact heat transfer between the mold and the press-forming metallic sheet, the springback analyzing unit 15 simulates mold release by restraining one or more nodes in the press-forming metallic sheet so as not to move, and then moving the mold. In this case, the springback analyzing unit 15 analyzes the temperature distribution of the press-forming metallic sheet (temperature analysis) considering removal of heat by contact with the mold, cooling by the air of a portion not in contact with the mold, or the like, in an exact manner.

In a method for performing a springback analysis without considering the contact heat transfer between the mold and the press-forming metallic sheet, because there is no temperature decrease in the press-forming metallic sheet caused by a contact with the mold, the springback analyzing unit 15 performs the springback analysis solely by considering the temperature decrease in the press-forming metallic sheet caused by cooling by the air. This method allows calculations to be simplified, and calculation results to be converged more simply, compared with when the springback analysis is performed considering the contact heat transfer between the mold and the press-forming metallic sheet.

Specifically, when a springback analysis not considering the contact heat transfer between the mold and the press-forming metallic sheet is performed, the springback analyzing unit 15 performs the springback analysis by using the information acquired at the step of analyzing press forming (S1) as initial conditions while restraining one or more nodes of the press-forming metallic sheet so that the press-forming metallic sheet does not move, and releasing a stress at the bottom dead point. At this time, the springback analyzing unit 15 assumes that the time for which the stress is released is a constant time.

When the time for which the stress is released from the condition at the bottom dead point is short, e.g., one second or less, a temperature decrease in the press-forming metallic sheet is at an negligible level. Therefore, the springback analyzing unit 15 may not perform the temperature distribution analysis. In such a case, the temperature distribution of the press-forming metallic sheet acquired at the step of analyzing press forming (S1) is carried over to the following step of analyzing cooling stress (S5) as a temperature distribution after the springback. When no temperature analysis is performed at the step of analyzing springback, the cooling stress analyzing unit 17 performs the structural analysis (e.g., analysis of conditions of stress) to be described later based on the temperature distribution and the temperature-dependent data acquired at the step of analyzing press forming (S1), in the same manner as when the temperature analysis is performed.

In either one of the methods, data such as the shape information, the temperature distribution, the stress distribution, and the strain distribution of the press-forming metallic sheet after springback is carried over to the following step of analyzing cooling stress (S5).

### Step of Analyzing Cooling Stress

The step of analyzing cooling stress requires the shape information acquired at the step of analyzing springback (S3). The shape information may be acquired by acquiring various types of data through executing a series of analyzing steps from the step of analyzing press forming (S1) to the step of analyzing springback (S3).

At the step of analyzing cooling stress, the cooling stress analyzing unit 17 restrains the particular nodes in the press-forming metallic sheet, and performs an analysis (cooling stress analysis) by coupling a temperature analysis and a structural analysis based on the shape information, the temperature distribution, the stress distribution, and the strain distribution acquired at the step of analyzing springback (S3), to acquire the residual stress distribution in the press-forming metallic sheet during the cooling process and after the cooling process (S5) .

It is preferable for the cooling stress analyzing unit 17 to conduct the cooling stress analysis after ensuring a sufficient cooling time until the temperature distribution falls within ±5 degrees Celsius, or preferably within ±1 degrees Celsius. Depending on the subject of the analysis or conditions of the analysis, there are some cases in which, once the temperature decreases by 100 degrees Celsius or so, the condition of the stress distribution does not change any further even if the temperature decreases more. In such a case, because the cooling stress analyzing unit 17 can acquire information identifying the cause of defective formation without performing any calculation until the temperature distribution falls within ±5 degrees Celsius, the calculation time can be shortened.

When the press-forming metallic sheet is cooled while the particular nodes are restrained, the thermal stress generated by cooling the press-forming metallic sheet is accumulated as a residual stress, as explained earlier. The cooling stress analyzing unit 17 can then acquire the residual stress thus accumulated as a residual stress distribution.

With respect to the residual stress distribution thus acquired, since the residual stress is kept by restraining the nodes, if the restraints on some of the restrained nodes are released, the residual stress is released to cause deformation, and might result in defective formation. Such defective formation can be treated in the same manner as the springback immediately after the mold release in the press forming. Therefore, various countermeasures for springback in the press forming (e.g., joggling or beading of a portion where the stress concentrates) are also effective as a countermeasure for such defective formation.

As explained above, the press-forming analyzing apparatus 1 according to the embodiment can acquire a thermal stress caused by a temperature distribution in a heated press-forming metallic sheet after springback as a residual stress distribution during the cooling process and after the cooling process, by performing the step of analyzing press forming (S1) to the step of analyzing cooling stress (S5) to the heated press-forming metallic sheet. In this manner, the press-forming analyzing apparatus 1 can opt various countermeasures for defective formation (countermeasures for springback) based on the residual stress distribution.

In the first process useful for understanding the present invention, the temperature distribution acquired by the springback analyzing unit 15 is used as the initial temperature distribution. Alternatively, an average temperature may be acquired from the temperature distribution acquired by the springback analyzing unit 15, and a uniform temperature distribution at the average temperature may be used.

The stress distribution acquired at the step of analyzing springback (S3) may be used as the initial stress distribution. Alternatively, a stress distribution uniform at zero may be used, without using the stress distribution thus acquired. In such a case, the effect of a temperature decrease on the defective formation can be further clarified.

### Second process useful for understanding the present invention

There are some cases in which the cause of defective formation cannot be identified solely by using the final residual stress distribution acquired in the manner disclosed in the process illustrated in FIG 2, e.g., when the shape of a press-forming metallic sheet or the residual stress distribution is complex. In such a case, the residual stress in specific regions of the press-formed product may be released as appropriate, and the changes in the shape corresponding to the release of the residual stress may be checked, to further clarify of which region the residual stress contributes largely to the defective formation.

A more specific explanation is as follows. As explained earlier, nodes are restrained to maintain the residual stress after the step of analyzing cooling stress

(S5). Therefore, if the restraints on some of the nodes are released, the residual stress is released and might cause deformation. Such deformation can be treated in the same manner as the springback immediately after the mold release in the press forming. Therefore, the springback analyzing unit 15 can analyze such deformation in the same manner as a regular springback analysis. Therefore, when conducting such a deformation analysis, the springback analyzing unit 15 gives a minimum restraining condition to the press-formed product for preventing the press-formed product from moving not to affect the deformation.

Generally explained now is a method for clarifying the cause of defective formation using such deformation. To begin with, the springback analyzing unit 15 changes the residual stress in a particular region in the stress distribution acquired at the step of analyzing cooling stress (S5), releases the residual stress in the other regions to cause deformation (springback), and checks the shape after the springback. The springback analyzing unit 15 then changes the residual stress in a region other than the region mentioned above in the stress distribution acquired at the step of analyzing cooling stress (S5), and releases the residual stress from the other regions to cause deformation (springback) in the same manner, and checks the shape after the springback.

By gradually shifting the regions from which the residual stress is released and comparing the shapes after springback, the springback analyzing unit 15 can clarify of which region the residual stress largely contributes to the defective formation. There are various ways for releasing the residual stress, and a second process useful for understanding the present invention of the present invention that is an example of the method will now be explained with respect to FIG 3.

The press-forming analysis method according to the FIG 3 is an example for identifying the cause of defective formation, and characterized in including a second step of analyzing springback (S7) in which the press-forming metallic sheet is divided into a plurality of regions after the series of analyzing steps from the step of analyzing press forming (S1) to the step of analyzing cooling stress (S5) explained earlier in the first process useful for understanding the present invention, as illustrated in FIG. 3, the residual stress in a specific one of the regions thus divided is set to zero, and the residual stresses in the other regions are released, and the springback analysis is then performed.

In FIG 3, the same steps as those illustrated in FIG. 2 are assigned with the same reference numerals, and explanations thereof are omitted hereunder. A press-forming analyzing apparatus 1 having the same structure as shown in FIG 1 is used as the press-forming analyzing apparatus 1.

In the FIG 3, the second step of analyzing springback, which is a characteristic of the second process useful for understanding the present invention, will now be explained in detail using warm press forming of an upper part 21 of a B-pillar, which is a pillar between the front seat and the rear seat in an automobile, illustrated in FIG. 4 as an example of a subject of the analysis.

### Second Step of Analyzing Springback

The second step of analyzing springback is executed by the springback analyzing unit 15. Required at the second step of analyzing springback (S7) is the shape information including information for identifying the nodes to be restrained and the stress distribution acquired at the step of analyzing cooling stress (S5). Therefore, the series of analyzing steps from the step of analyzing press forming (S1) to the step of analyzing cooling stress (S5) need to be executed before the second step of analyzing springback, as illustrated in FIG. 3.

At the second step of analyzing springback, the springback analyzing unit 15 divides the upper part 21 of the B-pillar, which is the subject of the analysis, into three regions including a region a, a region b, and a region c, as illustrated in FIG. 4, based on the shape information acquired at the step of analyzing cooling stress (S5).

The springback analyzing unit 15 then sets the residual stress in the region a to zero, and releases the residual stress in the other regions to induce springback. At this time, the springback analyzing unit 15 calculates the angle of torsion, the amount of curve at a certain location, and the like in the shape after the springback as a deformation value. When the deformation value is high, the springback analyzing unit 15 determines that the springback has increased, and when the deformation value is low, the springback analyzing unit 15 determines that the springback has been reduced.

The springback analyzing unit 15 then performs a springback analysis by setting the residual stress in the region b to zero and releasing the residual stress in the other regions, and by setting the residual stress in the region c to zero and releasing the residual stress in the other regions, in the same manner as described above, and calculates the respective deformation values.

The springback analyzing unit 15 then compares the shapes after the springback by comparing these deformation values. This can clarify the residual stress in which region largely contributes to the springback.

The springback analyzing unit 15 can then narrow down the region acting as the cause of the defective formation by further dividing the region contributing to the springback most into a plurality of regions, and comparing the deformation values in the same manner. For example, when the region c contributes most to the springback, the springback analyzing unit 15 can narrow down the region contributing most to the springback by further dividing the region c into a plurality of regions, and calculating and comparing the deformation values of the respective divided regions.

In the explanation above, a press-forming metallic sheet which is the subject of the analysis is divided into three regions, but the number of regions thus divided is not limited thereto, and may be changed as appropriate depending on a subject of analysis or analysis conditions. Furthermore, in the explanation above, the residual stress in a specific region of the press-forming metallic sheet is set to zero. Alternatively, the residual stress may be changed to a predetermined level or to have a predetermined distribution, taking a subject of the analysis or analysis conditions into consideration.

As explained above, in the second process useful for understanding the present invention, the press-forming metallic sheet is divided into a plurality of regions after performing the series of analyzing steps from the step of analyzing press forming (S1) to the step of analyzing cooling stress (S5). The residual stress in a specific one of the regions thus divided is then set to zero, and the residual stress in the other regions is released. A springback analysis is then performed by comparing the shape of each of the regions after the springback from which the residual stress is released. This can clarify the residual stress in which region largely contributes to defective formation; therefore, such information can be used in designing countermeasures for defective formation (countermeasures for springback).

### Embodiment

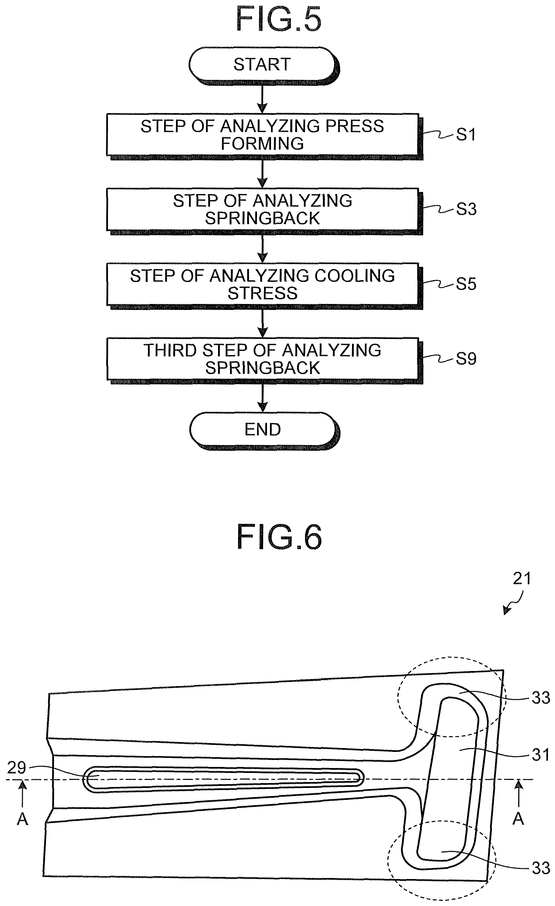

The method for releasing the residual stress is not limited to the method described above with respect to FIG 3. An embodiment of the present invention is a press-forming analysis method provided with another method for releasing the residual stress. The press-forming analysis method according to the embodiment is characterized in including a third step of analyzing springback in which a springback analysis is performed by dividing the press-forming metallic sheet into a plurality of regions after the step of analyzing cooling stress (S5), and sequentially releasing restraints on the nodes in a specific one of the regions thus divided, as illustrated in FIG. 5.

In FIG. 5, the same steps as those in the FIG 2 or 3 are assigned with the same reference numerals, and explanations thereof are omitted hereunder. A press-forming analyzing apparatus 1 having the structure shown in FIG. 1 is used as the press-forming analyzing apparatus 1. The third step of analyzing springback which is a characteristic of the embodiment will now be explained in detail.

### Third Step of Analyzing Springback

The third step of analyzing springback is executed by the springback analyzing unit 15. Required at the third step of analyzing springback (S9) is the shape information including information for identifying the nodes to be restrained acquired at the step of analyzing cooling stress (S5) and the stress distribution, in the same manner as the second step of analyzing springback (S7). Therefore, the series of analyzing steps from the step of analyzing press forming (S1) to the step of analyzing cooling stress (S5) need to be executed before the third step of analyzing springback.

In the example to be explained in the embodiment, an upper part 21 of a B-pillar of an automobile illustrated in FIG. 4 is used as an example of the press-forming metallic sheet, in the same manner as in the second process useful for understanding the present invention. At the third step of analyzing springback, to begin with, the springback analyzing unit 15 divides the upper part 21 of the B-pillar into three regions including a region a, a region b, and a region c illustrated in FIG. 4.

The springback analyzing unit 15 then releases the residual stress in the region a to induce springback, while maintaining the residual stress in the region b and the region c, and calculates the deformation value.

The springback analyzing unit 15 then releases the residual stress in the region b to induce springback while the residual stress in the region a is released, and calculates the deformation value. The springback analyzing unit 15 then releases the residual stress in the region c to induce springback while the residual stress in the region a and the region b is released, and calculates the deformation value.

The springback analyzing unit 15 can then evaluate of which region the residual stress contributes to the defective formation most by comparing the deformation values thus calculated and checking releasing of a residual stress of which region causes the largest change in the deformation value.

The springback analyzing unit 15 can narrow down candidate regions causing defective formation, by further dividing the region contributing largely to the defective formation and performing the same calculations, and evaluating of which region the release of the residual stress contributes most to the defective formation.

In the example above, the residual stress is released in the order of the region a, the region b, and the region c. The order at which the residual stress is released is not limited thereto, and may be changed as appropriate depending on the shape of the press-forming metallic sheet and the residual stress distribution.

As described above, in the embodiment, after the series of analyzing steps from the step of analyzing press forming (S1) to the step of analyzing cooling stress (S5), the press-forming metallic sheet is divided into a plurality of regions, and a springback analysis is performed by sequentially releasing restraints on nodes in a specific one of the regions thus divided, and the shapes after the springback that is induced by releasing the residual stress in the respective regions are compared. This can clarify the residual stress in which region contributes most to defective formation; therefore, such information can be used in designing or opting countermeasures for defective formation (countermeasures for springback).

As explained above, the press-forming analysis method according to the embodiment includes a step of analyzing cooling stress (S5) at which particular nodes are restrained based on the shape information, the temperature distribution, the stress distribution, and the strain distribution acquired at the step of analyzing springback (S3), and stress distributions during cooling process and after the cooling process are analyzed by coupling a temperature analysis and a structural analysis. Further, after the series of analyzing steps from the step of analyzing press forming (S1) to the step of analyzing cooling stress (S5), the press-forming metallic sheet is divided into a plurality of regions, and a springback analysis is performed by sequentially releasing restraints on nodes in a specific one of the regions thus divided, and the shapes after the springback that is induced by releasing the residual stress in the respective regions are compared. In this manner, the thermal contraction caused by the temperature distribution after the springback can be converted into a residual stress, and the effect of the cooling after the mold release to the final defective formation can be predicted simply and appropriately, and testing hours and costs in the designing stage of a press-formed product can be expected to be reduced, advantageously.

### Example

To confirm the effectiveness of the present invention, the experiment to be explained below was conducted. In this experiment, an upper part 21 of a B-pillar of an automobile illustrated in FIG. 6 that is the same as that illustrated in FIG. 4 was actually warm press-formed, and a press forming analysis was conducted. A countermeasure for defective formation was then explored.

The experiment method and the investigation method were generally as follows. To begin with, the metallic sheet was actually pressed without implementing any countermeasure for defective formation (hereinafter, referred to as actual pressing before countermeasure), and confirmed the defective formation caused by cooling. To identify the cause of the defective formation, the analyzing steps including the step of analyzing press forming to the step of analyzing cooling stress are then performed using the press-forming analysis method applied with the present invention, and information for identifying the cause of the defective formation was acquired. Based on the information, springback analyses were then conducted for both cases with and without a countermeasure for the defective formation, and the validity of the countermeasure for the defective formation thus implemented was evaluated (second step of analyzing springback). Finally, the metallic sheet was then actually pressed with an implementation of the countermeasure for the defective formation (hereinafter, referred to as actual pressing after countermeasure), and the resultant shape was compared with that resulting from the actual pressing before countermeasure.

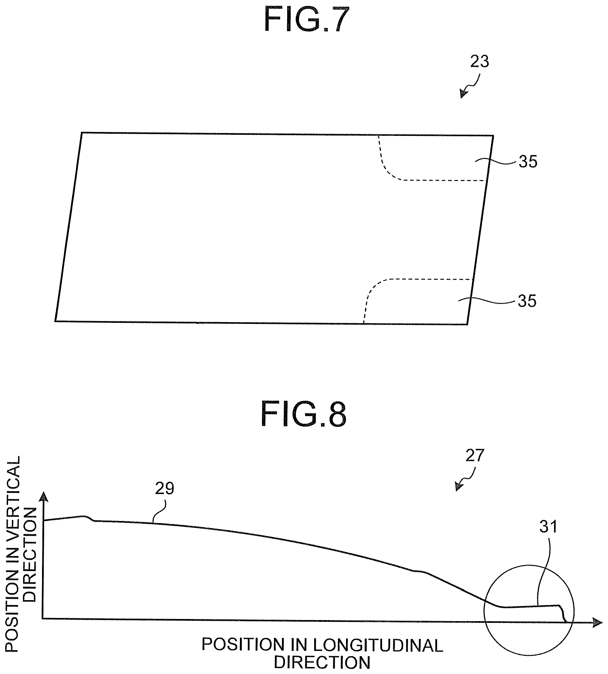

To begin with, the actual pressing before countermeasure will be explained. As illustrated by a solid line in FIG. 7, used as a press-forming metallic sheet 23 is high strength steel of 980 megapascals, with an initial shape of a parallelogram having an external shape with a base of 650 millimeters and a height of 300 millimeters, and with a thickness of 1.4 millimeters. The press-forming metallic sheet 23 was then heated to 680 degrees Celsius in an electric furnace, mounted in the mold of a press machine using a conveyer robot, and then press-formed. The temperature of the time when the press forming was started was 600 degrees Celsius. In other words, a thermocouple was mounted at the center of the press-forming metallic sheet 23 in advance, and the temperature change was measured under the same condition. The temperature of the press-forming metallic sheet 23 at the time when mounting on the press forming machine was completed was 600 degrees Celsius. As a method of press forming, deep-drawing was performed with a blankholding force of 45 ton-force. The average press forming speed was 100 mm/s. The press-forming metallic sheet 23 was then released from the mold immediately after the punch reached the bottom dead point of the press, and cooled to the room temperature, to acquire the press-formed product (hereinafter, referred to as an actual press product (before countermeasure)). At this time, defective formation occurred due to the cooling. Finally, the shape of the actual press product (before countermeasure) visible from the top was measured using a noncontact three-dimensional shape measuring apparatus.

When a shape 25 of the actual press product (before countermeasure) and a mold shape 27 were compared, defective formation was found on the actual press product (before countermeasure), as mentioned earlier. The defective formation will now be explained with reference to FIGS. 6, 8, and 9. The shapes are compared using shape analyzing software, based on the shape data acquired from the shapes of these two. Specifically, the comparison was conducted in the manner described below.

The IGES (Initial Graphics Exchange Specification) data, which is a shape data of the mold surface, created in designing the mold was used as the shape data of the mold shape 27. The shape data of the shape 25 of the actual press product (before countermeasure) was created from the measured shape. Because the measured shape was a measurement of a shape visible from the top, as mentioned earlier, the shape was offset by 1.4 millimeters which corresponds to the thickness of the press-forming metallic sheet 23, to enable a comparison with the mold shape 27.

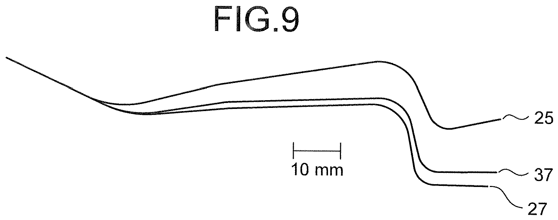

These pieces of shape data of these two across the arrow A-A illustrated in FIG. 6 were aligned using the shape analyzing software in a manner bringing the peripheries of a bead-shape 29 on the punch bottom to be best-fitted, i.e. to be fitted nearly completely, and the shapes were compared. FIG. 8 illustrates a cross-sectional view of the mold shape 27 across A-A. By comparing the shape 25 of the actual press product (before countermeasure) with the mold shape 27, a profound defective formation was found at a tip 31 surrounded by a circle in FIG. 8. FIG. 9 illustrates an enlarged view of the tip 31 surrounded by the circle in FIG. 8. As illustrated in FIG. 9, through the comparison with the mold shape 27, the shape 25 of the actual press product (before countermeasure) was confirmed to be deformed in a manner springing upwardly.

In order to understand the cause of the defective formation, executed is the series of analyzing steps including the step of analyzing press forming (S1), the step of analyzing springback (S3), the step of analyzing cooling stress (S5), and the second step of analyzing springback (S7) illustrated in FIG. 3, by applying the press-forming analysis method according to the present invention. Each of the steps will now be explained.

### Step of Analyzing Press Forming

To begin with, necessary data and conditions were entered to the press forming analyzing unit 13, and a press forming analysis was conducted. The data and the conditions entered to the press forming analyzing unit 13 were generally as follows. Used as each characteristic of the press-forming metallic sheet 23 was data measured from the same steel grade as the press-forming metallic sheet 23 that was actually warm press-formed. Specifically, temperature-dependent data including a specific heat, the thermal conductivity, the thermal expansion coefficient, the Young's modulus, and the Poisson's ratio were measured, and tension tests were conducted under 400 degrees Celsius, 500 degrees Celsius, and 600 degrees Celsius, respectively, to create a stress-strain diagram model. The data of the stress-strain diagram model was then used as the characteristics of the press-forming metallic sheet 23. The thickness center of the initial shape of the press-forming metallic sheet 23 used in the actual warm press forming was modeled as a shell element. The surface of the mold used in the actual warm press forming was modeled as a shell element. The press-forming metallic sheet 23 is assumed to be a deformable body, and the mold was assumed to be a rigid body.

In the press forming analysis, the press-forming metallic sheet 23 was considered to be in contact with the mold when the distance between the surface of the press-forming metallic sheet 23 and the mold surface became less than 0.01 millimeter, and a heat flux was calculated from the contact heat transfer. When the distance between the surface of the press-forming metallic sheet 23 and the mold surface is equal to or more than 0.01 millimeter, a radiation and a convection were taken into account, considering that the press-forming metallic sheet 23 would be cooled by the air. The emissivity of the press-forming metallic sheet 23 was set to 0.75. The initial temperature of the press-forming metallic sheet 23 was assumed to be constant at 600 degrees Celsius.

### Step of Analyzing Springback

Using the springback analyzing unit 15, a springback analysis was conducted. As the springback analysis, movements at two nodes on the punch bottom and at one node on the flange were restrained, and the stress was released from a condition when the punch is at the bottom dead point. The releasing time of the stress was set to 0.5 second, and the temperature analysis was conducted assuming that the press-forming metallic sheet 23 was cooled by the air during this period.

### Step of Analyzing Cooling Stress

The cooling stress analyzing unit 17 was then used to conduct a cooling stress analysis on the change in the stress distribution caused by cooling. In the cooling stress analysis, it was assumed that the press-formed product was cooled by the air for 1000 seconds while restraining all of the nodes along the edge of the press-formed product (nodes surrounding the processed portion) so that no movement is permitted. The analysis results of the step of analyzing springback were used for the initial temperature distribution and the initial stress distribution. The temperature distribution of the time when the cooling stress analysis was completed was within ±1 degree Celsius. In the von Mises stress distribution acquired as a residual stress distribution of the time when the cooling stress analysis was completed, regions with high von Mises stress were found in bag-shaped portions 33, which are surrounded by dotted lines in FIG. 6. The regions with high von Mises stress have appeared at the point in time at which the temperature declined approximately 100 degrees Celsius, which was approximately 30 seconds after the cooling was started. Based on this residual stress distribution, the inventors determined that these bag-shaped portions 33 largely contributed to the defective formation.

### Second Step of Analyzing Springback

Based on the determination, the inventors came up with a countermeasure for the defective formation which was to change the initial shape of the press-forming metallic sheet 23. Specifically, two corners 35 of the press-forming metallic sheet 23 before the countermeasure for the defective formation were removed along the dotted lines, as illustrated in FIG. 7. In order to confirm the effectiveness of the countermeasure for the defective formation, the inventors used the springback analyzing unit 15 to perform two patterns of springback analyses on the sheet before and after the countermeasure for the defective formation, calculated deformation values for evaluating the amount of upward springing of the tip 31, and compared these deformation values.

In the first pattern, in order to observe a change from the initial shape before the countermeasure for the defective formation, the inventors conducted a springback analysis using the residual stress distribution acquired from the cooling stress analysis as the initial distribution. In the second pattern, in order to observe a change from the initial shape after the implementation of the countermeasure for the defective formation, the inventors set the residual stress in the portions corresponding to the two corners 35 to be removed to zero in the residual stress distribution acquired from the cooling stress analysis, and then conducted the springback analysis. When the results were compared, the deformation value, which is the result of the springback analysis after countermeasure, was smaller. Therefore, the inventors were able to confirm that the defective formation was reduced based on the simulation.

The inventors then confirmed the effectiveness of the defective formation countermeasure in the actual pressing after countermeasure. In the actual pressing after countermeasure, the press-forming metallic sheet 23 was press-formed under the same condition as those in the actual pressing before countermeasure, except that the initial shape of the press-forming metallic sheet 23 was changed to the shape of the press-forming metallic sheet 23 after the countermeasure for the defective formation. After the press forming, the shape of the product of the actual pressing after countermeasure (hereinafter, referred to as an actual press product (after countermeasure)) visible from the top was then measured using a noncontact three-dimensional shape measuring apparatus.

The inventors then used shape analyzing software to align and the mold shape 27 with a shape offset downwardly from the shape thus measured by 1.4 millimeters as shape data of the actual press product (after countermeasure) in a manner bringing the peripheries of the respective bead-shapes 29 on the punch bottom to be best-fitted, and compared these shapes.

FIG. 9 illustrates a result of the comparison of a shape 25 of the actual press product (before countermeasure) and the mold shape 27 at tips 31 thereof, and further comparison of a shape 37 of the actual press product (after countermeasure) and the mold shape 27 at tips 31 thereof. As may be understood from FIG. 9, the shape 37 of the actual press product (after countermeasure) is nearer to the mold shape 27 than the shape 25 of the actual press product (before countermeasure), and it can be seen that the defective formation was reduced by a large degree.

As described above, in the press-forming analysis method according to the present invention, in addition to a press forming analysis and a springback analysis, a cooling stress analysis is conducted to acquire a residual stress distribution based on a temperature distribution that is given based on a series of data acquired from these analyses. This enables to acquire information capable of identifying the cause of defective formation simply and appropriately, and it is demonstrated that defective formation can be reduced by a large degree by implementing a countermeasure for the defective formation based on such information.

The embodiment described above is merely examples for implementing the present invention, and the present invention is not limited to this embodiment. Various modifications implemented correspondingly to specifications are within the scope of the present invention. It is clear from the description above that other various embodiments are still possible within the scope of the present invention.

### Industrial Applicability

The present invention can be applied to a press forming analyzing process for identifying the cause of defective formation after cooling when a heated press-forming metallic sheet is press-formed.

### Reference Signs List

1 press-forming analyzing apparatus
3 display device
5 input device
7 main memory unit
9 auxiliary memory unit
11 arithmetic processing unit
13 press forming analyzing unit
15 springback analyzing unit
17 cooling stress analyzing unit
21 upper part of B-pillar
23 press-forming metallic sheet
25 shape of actual press product (before countermeasure)
27 mold shape
29 bead-shape
31 tip
33 bag-shaped portion
35 corner
37 shape of actual press product (after countermeasure)

## Claims

1. A computer-implemented press-forming analysis method for predicting the shape of a press-forming metallic sheet after a cooling process when the press-forming metallic sheet is heated and press-formed, comprising:
a step (S1) of analyzing press forming, including:
setting an initial temperature distribution to a heated press-forming metallic sheet, and
acquiring a shape information, a temperature distribution, a stress distribution, and a strain distribution before mold release by conducting a press forming analysis in which a temperature analysis and a structural analysis are coupled;
a step (S3) of analyzing springback, including:
conducting a springback analysis based on the shape information, the temperature distribution, the stress distribution, and the strain distribution acquired at the step of analyzing press forming, and
acquiring shape information, a temperature distribution, a stress distribution, and a strain distribution after springback by the springback analysis;
a step (S5) of analyzing cooling stress, including:
restraining particular nodes and analyzing stress distributions during cooling and after the cooling by coupling a temperature analysis and a structural analysis based on the shape information, the temperature distribution, the stress distribution, and the strain distribution acquired at the step of analyzing springback; **characterized in that** it comprises a further step (S9) of analyzing springback, wherein the press-forming metallic sheet is divided into a plurality of regions after the cooling stress analyzing
step (S5), and a springback analysis is conducted by releasing a stress in a specific one of the regions thus divided sequentially.

2. The computer-implemented press-forming analysis method according to claim 1, wherein the particular nodes are nodes surrounding an entire processed portion or a part of the processed portion of the press-forming metallic sheet.

3. The computer-implemented press-forming analysis method according to claim 1, wherein the particular nodes are all of the nodes.

## Patentansprüche

1. Computerimplementiertes Pressformungsanalyseverfahren zum Vorhersagen der Form eines Pressformungsmetallblechs nach einem Abkühlvorgang, wenn das Pressformungsmetallblech erhitzt und pressgeformt wird, umfassend:
einen Schritt (S1) eines Analysierens einer Pressformung, beinhaltend:
Einstellen einer anfänglichen Temperaturverteilung zu einem erhitzten Pressformungsmetallblech, und
Beziehen einer Forminformation, einer Temperaturverteilung, einer Spannungsverteilung und einer Dehnungsverteilung vor einer Formtrennung durch Durchführen einer Pressformungsanalyse, in der eine Temperaturanalyse und eine Strukturanalyse gekoppelt sind;
einen Schritt (S3) eines Analysierens einer Rückfederung, beinhaltend:
Durchführen einer Rückfederungsanalyse auf der Basis der Forminformation, der Temperaturverteilung, der Spannungsverteilung und der Dehnungsverteilung, die in dem Schritt des Analysierens der Pressformung bezogen wurden, und
Beziehen einer Forminformation, einer Temperaturverteilung, einer Spannungsverteilung und einer Dehnungsverteilung nach einer Rückfederung durch die Rückfederungsanalyse;
einen Schritt (S5) eines Analysierens einer Abkühlspannung, beinhaltend:
Beschränken von bestimmten Knoten und Analysieren von Spannungsverteilungen während eines Abkühlens und nach dem Abkühlen durch Koppeln einer Temperaturanalyse und einer Strukturanalyse auf der Basis der Forminformation, der Temperaturverteilung, der Spannungsverteilung und der Dehnungsverteilung, die in dem Schritt des Analysierens der Rückfederung bezogen wurden;
**dadurch gekennzeichnet, dass** es einen weiteren Schritt (S9) eines Analysierens einer Rückfederung, wobei das Pressformungsmetallblech in mehrere Regionen aufgeteilt wird, nach dem Abkühlspannungsanalyseschritt (S5) umfasst und eine Rückfederungsanalyse durch Abbauen einer Spannung in einer spezifischen der so sequentiell aufgeteilten Regionen durchgeführt wird.

2. Computerimplementiertes Pressformungsanalyseverfahren nach Anspruch 1, wobei die bestimmten Knoten Knoten sind, die einen ganzen bearbeiteten Abschnitt oder einen Teil des bearbeiteten Abschnitts des Pressformungsmetallblechs umgeben.

3. Computerimplementiertes Pressformungsanalyseverfahren nach Anspruch 1, wobei die bestimmten Knoten all die Knoten sind.

## Revendications

1. Procédé d'analyse de formage à la presse mis en oeuvre par ordinateur pour prédire la forme d'une feuille métallique de formage à la presse après un processus de refroidissement lorsque la feuille métallique de formage à la presse est chauffée et formée à la presse, comprenant :
une étape (S1) d'analyse de formage à la presse, comprenant :
l'établissement d'une distribution de température initiale à une feuille métallique de formage à la presse chauffée, et
l'acquisition d'une information de forme, une distribution de température, une distribution de contrainte et une distribution d'effort avant démoulage en effectuant une analyse de formage à la presse dans laquelle une analyse de température et une analyse structurelle sont couplées ;
une étape (S3) d'analyse de retour élastique, comprenant :
la réalisation d'une analyse du retour élastique sur la base des informations de forme, de la distribution de température, de la distribution de contrainte et de la distribution d'effort acquises à l'étape d'analyse de formage à la presse, et
l'acquisition d'une information de forme, d'une distribution de température, d'une distribution de contrainte et d'une distribution d'effort après un retour élastique par l'analyse de retour élastique ;
une étape (S5) d'analyse de contrainte de refroidissement, comprenant :
la retenue de noeuds particuliers et l'analyse de distributions de contrainte pendant un refroidissement et après le refroidissement en couplant une analyse de température et une analyse structurelle sur la base de l'information de forme, de la distribution de température, de la répartition de contrainte, et de la distribution d'effort acquises à l'étape d'analyse de retour élastique ;
**caractérisé en ce qu'**il comprend
une étape supplémentaire (S9) d'analyse de retour élastique, dans lequelle la feuille métallique de formage à la presse est divisée en une pluralité de zones après l'étape d'analyse de contrainte de refroidissement (S5), et une analyse de retour élastique est réalisée en libérant une contrainte dans une zone spécifique parmi les zones ainsi divisées séquentiellement.

2. Procédé d'analyse de formage à la presse mis en oeuvre par ordinateur selon la revendication 1, dans lequel les noeuds particuliers sont des noeuds entourant une partie traitée complète ou une partie de la partie traitée de la feuille métallique de formage à la presse.

3. Procédé d'analyse de formage à la presse mis en oeuvre par ordinateur selon la revendication 1, dans lequel les noeuds particuliers sont tous les noeuds.
